# EUROPEAN PATENT SPECIFICATION

(11) **EP 0 842 833 B1**
(45) Date of publication and mention of the grant of the patent: **03.12.2003**
(21) Application number: 97117396.8
(22) Date of filing: 08.10.1997
(51) Int. Cl.: B60R 25/04, F02P 11/04

(54) **Ignition control system**
Zündsteuersystem
Dispositif de commande d'allumage

(30) Priority: 18.11.1996 JP 30689296
(43) Date of publication of application: 20.05.1998
(73) Proprietor: HONDA GIKEN KOGYO KABUSHIKI KAISHA, Minato-ku Tokyo (JP)
(72) Inventor: Konno, Takesi, 4-1 Chuo 1-chome, Wako-shi, Saitama (JP); Hatayama, Atsushi, 4-1 Chuo 1-chome, Wako-shi, Saitama (JP)
(74) Representative: Liska, Horst, Dr.-Ing.

(56) References cited:
- FR-A- 2 732 077
- US-A- 5 554 891
- PATENT ABSTRACTS OF JAPAN vol. 017, no. 144 (M-1386), 23 March 1993 (1993-03-23) & JP 04 318284 A (YAMAHA MOTOR CO LTD), 9 November 1992 (1992-11-09)
- PATENT ABSTRACTS OF JAPAN vol. 1995, no. 06, 31 July 1995 (1995-07-31) & JP 07 069174 A (SUMITOMO ELECTRIC IND LTD;OTHERS: 01), 14 March 1995 (1995-03-14)
- PATENT ABSTRACTS OF JAPAN vol. 013, no. 545 (M-902), 6 December 1989 (1989-12-06) & JP 01 224474 A (MITSUBISHI ELECTRIC CORP), 7 September 1989 (1989-09-07)
- PATENT ABSTRACTS OF JAPAN vol. 016, no. 232 (M-1256), 28 May 1992 (1992-05-28) & JP 04 047167 A (MAZDA MOTOR CORP), 17 February 1992 (1992-02-17)

## Description

The present invention relates to an ignition control system which is installed in a vehicle without a battery and has an anti-theft feature.

The applicant has already proposed, in Japanese Patent application No. Hei 7-66249, an ignition control system with an anti-theft function which has a nonlinear element assembled in a main switch for a vehicle without a battery and enables a vehicle engine to be ignited only when a particular voltage generated by the nonlinear element is detected. This document corresponds to FR-A-2 732 077 and shows the features of the preamble of claim 1.

In the application No. Hei 7-66249, when the ignition system with the anti-theft feature is installed in a batteryless vehicle without making any modification therein, a vehicle engine is intermittently activated by using a rectified output of a regulator through rectifying a generated output of an AC generator. It is necessary to match a voltage determining output for the anti-theft feature and pulse signal generating timing of a pulse coil with a phase of the rectified output of the regulator. This means that a dedicated AC generator is required for the anti-theft feature and that layout of the vehicle engine has to be changed, etc. This makes it difficult for these components to be used in normal circumstances.

Further, a battery for a small vehicle such as a motorcycle has a relatively small capacity. Even when the battery is dead after it is not in use for a long time, and so on, measures have to be taken in order to activate the vehicle engine by kick-starting or pushing the vehicle.

It is difficult to cope with such a request in the foreqoing ignition control system.

The present invention is contemplated in order to overcome the foregoing problem without use of a dedicated AC generator or layout modification of a vehicle engine, and is intended to provide an ignition control system which has an anti-theft feature and is applicable to a vehicle that does not have a battery.

In order to accomplish the foregoing objects of the present invention, there is provided an ignition control system which comprises: reference voltage generating means for generating a reference voltage each time the rectified output is produced; and an ignition controller for controlling ignition of the vehicle engine on the basis of the reference voltage and the rectified output. The ignition controller comprises: voltage determining means for determining whether or not the rectified output is equal to or larger than the reference voltage and comparing the reference voltage with the rectified output, and outputting a comparision result signal indicative of a determination result; and control means for outputting an ignition signal to an ignition coil on the basis of the comparison result signal and the pulse signal.

Therefore, it is possible to improve the reliability of the voltage determining means. Further, it is not necessary to match the pulse signal generating timing of the pulse coil with the phase of the generated output of the AC generator. This means that components can be used in common.

The control means comprises digital control means which includes: ignition timing computing means for computing ignition timing of the vehicle engine at a front half of the pulse signal cycle on the basis of the pulse signal and pulse cycle signal and outputting an ignition timing signal indicative of the computed ignition timing to the igniting means; and ignition control means for receiving, at a latter half of the pulse signal cycle after the computation of the ignition timing by the ignition timing computing means, the determination signals each time the rectified output is produced, performing majority determination on the basis of the received determination signals, and controlling permission or suspension of the ignition in a succeeding pulse signal cycle in response to the ignition timing signal.

This arrangement is effective in precisely computing the ignition timing without accelerating a computation speed of the ignition timing computing means.

The control means comprises digital control means which includes: pulse cycle measuring means for measuring the cycle of pulse signal and outputting a pulse cycle signal; differential computing means for computing cyclic variations of the pulse signal and outputting a differential signal indicative of the computed result;
pulse cycle estimating means for estimating a cycle of a succeeding pulse signal on the basis of the pulse cycle signal and the differential signal and outputting a pulse cycle signal indicative of the estimated result;
ignition control means for producing an ignition control signal on the basis of the determination signal and the pulse cycle signal; ignition timing computing means for computing ignition timing of the vehicle engine on the basis of the pulse signal and the pulse cycle estimating signal, and outputting an ignition timing signal indicative of computed ignition timing; and igniting means for outputting an ignition signal to the ignition coil on the basis of the ignition control signal and the ignition timing signal.

Therefore, the ignition control system enables vehicle engines having different characteristics to be optimally ignited in accordance with an engine speed. Further, it is not necessary to match the pulse signal generating timing of the pulse coil with the phase of the generated output of the AC generator, which is effective in enabling components to be used in common.

The control means comprises analog control means which includes: igniting means for outputting an ignition signal to an ignition coil in response to the pulse signal; an igniting power source for powering the igniting means; and switch means for enabling/disabling the supply of power to the igniting power source in response to the determination signal.

Therefore, it is not necessary to match the pulse signal generating timing of the pulse coil with the phase of the generated output of the AC generator. These components can be used in common.

The switch means comprises: igniting power source switch means for enabling/disabling the supply of power to the igniting power source; and control switch means adapted to be turned off and turn on the igniting power source switch means only when the determination signal denotes allowance of ignition and adapted to be turned on and turn off the igniting power source switch means when the determination signal denotes a state other than allowance of ignition.

Therefore, it is possible to reliably control the ignition on the basis of the determination result of the voltage determining means.

The present invention will be described with reference to an embodiment shown in the accompanying drawings.

### Brief Description of the Drawings

Fig. 1 is a block diagram of an ignition control system according to the present invention.

Fig. 2 is a block diagram of another ignition control system according to the present invention.

Fig. 3 is a diagram for explaining the operation of the ignition control systems of the present invention.

Fig. 4 is a context diagram of the ignition control systems according to the present invention.

Fig. 5 is a data flow diagram of the ignition control systems according to the present invention.

Fig. 6 is a detailed data flow diagram of DFD7.

Fig. 7 shows ignition angle data θ(t1) characteristics with respect to engine speeds Ne (rpm).

Fig. 8 is a block diagram of a main part of a further ignition control system according to the present invention.

Fig. 9 is a block diagram of a main part of a still further ignition control system according to the present invention.

Fig. 10 is a block diagram of a main part of a further ignition control system according to the present invention.

Fig. 11 is a diagram showing the regular operation of the ignition control systems of the present invention.

Fig. 12 is a diagram showing the anti-theft operation of the ignition control systems of the present invention.

Fig. 13 is a block diagram of a still further ignition control system according to the present invention.

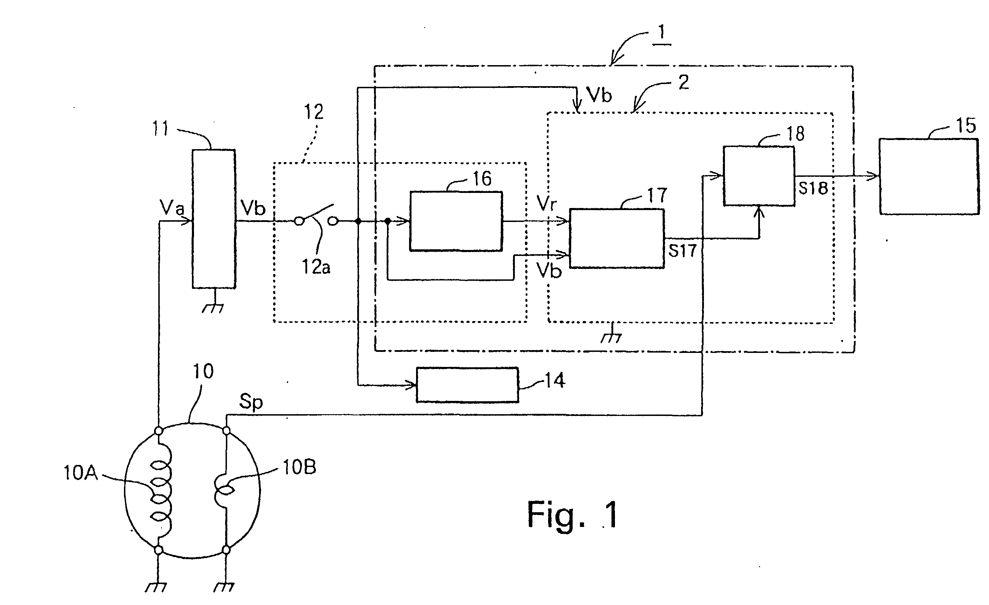

Fig. 1 is a block diagram showing a main part of an ignition control system 1 according to the present invention.

Referring to Fig. 1, the ignition control system 1 comprises a reference voltage generating means 16 and an ignition controller 2.

The ignition controller 2 comprises a voltage determining means 17 and a control means 18.

An AC generating means 10, a regulator 11, a main switch 12, a DC load 14, and an ignition coil 15 are arranged around the ignition control system 1.

A charging coil 10A of the AC generator 10 generates AC power in response to the rotation .of a vehicle engine.

Generally, the AC generator 10 has several poles (e.g., a single phase and 8 poles ), so that the charging coil 10A generates the AC power for operating the vehicle engine in the pole number/2 cycles per rotation thereof (for example, four cycles if there are 8 poles).

A pulse coil 10B of the AC generator 10 produces one pulse signal Sp per rotation of the vehicle engine.

The regulator 11 rectifies a generated output Va of the charging coil 10A, and outputs a rectified output Vb to the reference voltage generating means 16 of the ignition control system 1 via the main switch 12.

The reference voltage generating means 16 generates a reference voltage Vr using the rectified output Vb, and outputs the reference voltage Vr to the voltage determining means 17.

The reference voltage generating means 16 cannot generate the reference voltage Vr having a predetermined range when the rectified output Vb of the regulator is insufficient.

The voltage determining means 17 checks whether or not the reference voltage Vr is in the predetermined range each time the regulator 11 supplies the rectified output Vb. When the reference voltage Vr is not in the predetermined range, the voltage determining means 17 produces a determination signal S17 by integrating determination signals indicative of ignition suspension, and outputs the determination signal S17 to the control means 18.

When the reference voltage Vr is determined to be in the predetermined range, the voltage determining means 17 compares it with the rectified output Vb in order to determine whether or not the rectified output Vb is equal to or larger than the reference voltage Vr. If not, the voltage determining means 17 provides the control means 18 with the determination signal S17 which is produced by integrating the determination signals indicative of the ignition suspension.

When the reference voltage Vr is in the predetermined range and when the rectified output Vb is equal to or larger than the reference voltage Vr, the voltage determining means 17 provides the control means 18 with the determination signal S17 which is produced by integrating determination signals indicative of allowance of ignition.

Even when the pulse signal Sb is input from the pulse coil 10B, the control means 18 does not output an ignition signal S18 to the ignition coil 15 if the determination signal S17 from the voltage determining means 17 has a level lower than a predetermined level.

On the contrary, when the determination signal S17 has a level equal to or larger than the predetermined level, the control means 18 outputs the ignition signal S18 to the ignition coil 15 in response to the pulse signal Sp from the pulse coil 10B.

The ignition coil 15 ignites the vehicle engine in response to the ignition signal S18 from the control means 18.

The ignition control system 1 comprises the reference voltage generating means 16, voltage determining means 17 and control means 18, so that the voltage determining means 17 can determine the voltage with improved reliability. Further, it is not necessary to match the pulse signal generating timing of the pulse coil with the phase of the generated output of the AC generator. Components can therefore be applied to common use and the invention can provide an economical ignition control system which is applicable to a vehicle without a battery and has an anti-theft feature.

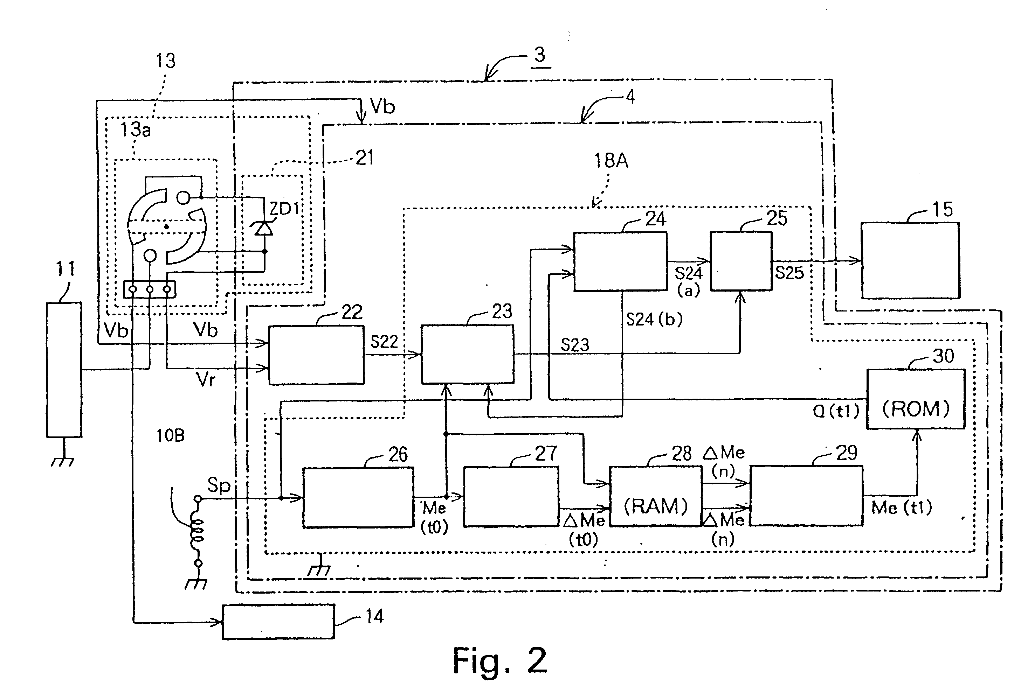

Fig. 2 is a block diagram of a main part of an ignition control system 3 according to the present invention.

Referring to Fig. 2, the ignition control system 3 comprises a reference voltage generating means 21 and an ignition controller 4.

The ignition controller 4 comprises a voltage determining means 17 and a digital control means 18A.

The digital control means 18A comprises a CPU (Central Processor Unit) as a main part, an ignition control means 23, an ignition timing computing means 24, an igniting means 25, a pulse cycle measuring means 26, a differential computing means 27, a memory means 38, a pulse cycle estimating means 29, and a memory means 30.

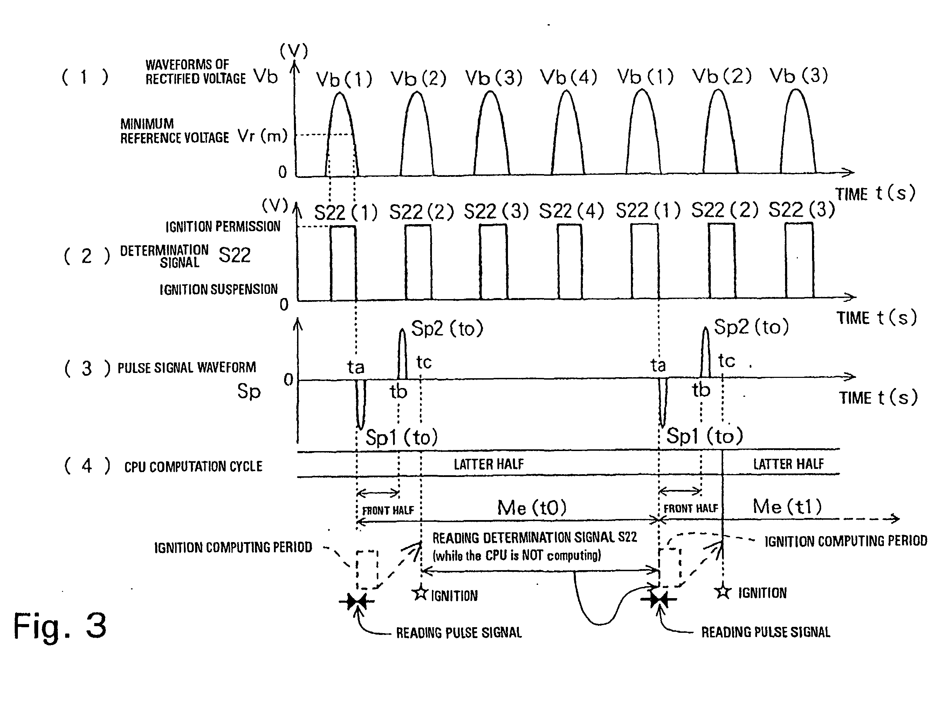

Fig. 3 shows the operation of the ignition control system 3 of the present invention.

The operation of the ignition control system in Fig. 2 will be described with reference to Fig. 3.

The reference voltage generating means 21 produces the reference voltage Vr at a Zener diode ZD1 from the rectified output Vb supplied by the regulator 11 via the main switch 13.

Fig. 3-(1) shows waveforms of the rectified outputs Vb produced by the regulator 11 through rectifying the generated output Va of the AC generator 10 having eight poles.

Fig. 3-(3) shows waveforms of the pulse signals Sp which are equal to an engine speed and are generated by the pulse coil 10B.

Referring to Fig. 3-(1), the waveforms of the rectified outputs Vb are four half-wave rectified waveforms Vb(1), Vb(2), Vb(3) and Vb(4) per rotation of the vehicle engine.

In Fig. 3-(1), a minimum,reference voltage Vr(m) is a Zener voltage of the Zener diode ZD1.

The reference voltage Vr becomes zero when the rectified output Vb of the regulator 11 is equal to or less than the Zener voltage of the Zener diode ZD1.

The voltage determining means 17 determines whether or not the reference voltage Vr is within the predetermined range, each time the rectified output Vb is output by the regulator 11. If not, the voltage determining means 17 outputs a determination signal S22 (voltage 0) indicative of the ignition suspension.

When the reference voltage Vr is within the predetermined range, the voltage determining means 17 compares it with the rectified output Vb in order to check whether or not the rectified output Vb is equal to or larger than the reference voltage Vr. If not, the voltage determining means 17 provides the ignition control means 23 with the determination signal S22 (voltage 0) indicative allowance of ignition.

When the reference voltage Vr is within the predetermined range and when the rectified output Vb is equal to or larger than the reference voltage Vr, the voltage determining means 17 provides the ignition control means 23 with the determination signal indicative of allowance of ignition.

Fig. 3-(2) shows the determination signals {S22(1) - S22(4)} indicative of allowance of ignition of the voltage determining means 17.

The pulse cycle measuring means 26 measures cycles of the pulse signals generated by the pulse coil 10B in response to the rotation of the vehicle engine, and outputs a pulse cycle signal Me(t) to the control means 23 and the memory means 28.

Fig. 3-(3) shows waveforms of the pulse signals Sp.

As shown in Fig. 3-(3), the pulse signals Sp are negative signals Sp1(t) and positive signals Sp2(t).

The pulse cycle measuring means 26 measures a period between time ta of the negative signal Sp1(+0) and time td of the negative signal Sp1(t1).

The ignition control means 23 provides the igniting means 25 with the ignition control signal S23 on the basis of the determination signal S22, pulse cycle signal Me(t), and an ignition control start signal S24(b) from the ignition timing computing means 24. The ignition control start signal S24(b) will be described later.

The ignition control means 32 outputs the ignition control signal S23 for permitting ignition in the case of a first rotation of the vehicle engine {when the pulse cycle signal Me(t)<26.09ms} after the activation of the digital control means 18A (CPU).

The ignition control means 32 outputs the ignition control signal S23 for suspending ignition in the case of rotations other than the first rotation after the activation of the digital control means 18A (CPU) when the pulse cycle signal Me(t)is less than 26.09 ms.

When the pulse cycle signal Me(t) is equal to or larger than 26.09 ms, the ignition control means 23 reads, during a latter half of a CPU computing cycle (i.e. while the CPU is not computing), the determination signals {s22(2), S22(3), S22(4) and S22(1)} each time the rectified output Vb is provided, thereby performing majority determination. Specifically, if three or more determination signals S22 represent allowance of ignition, the ignition control means 32 provides the igniting means 25 with the ignition control signal S23 for permitting the ignition.

When two or more determination signals S22 denote the ignition suspension, the ignition control means 32 provides the ignition means 25 with the ignition control signal S23 for suspending the ignition.

In the digital control means.18A, the differential computing means 27 and the pulse cycle estimating means 29 compute or process data, which are necessary for the ignition timing computing means 24 to compute ignition timing, during latter halves (tb ∼ td, te ∼) of the cycle Me(t) shown in Fig. 3-(4).

The differential computing means 27 computes a differential between the current pulse cycle signal Me(t0) and the previous pulse cycle signal Me(-t1), and outputs a differential signal ΔMe(t0) to the memory means 28.

The memory means 28 comprises a RAM (Random Access Memory) etc., sequentially stores N pulse cycle signals Me(t) and N differential computation results ΔM2(t) which are differentials between the N pulse cycle signals Me(t) and their previous pulse cycle signals Me(-t), and sequentially provides the pulse cycle estimating means 29 with N pulse cycle signals Me(n) and differential signals ΔMe(n).

The pulse cycle estimating means 29 sequentially estimates pulse cycles following the current pulse cycle signal Me(t1) on the basis of N pulse cycle signals Me(n) and the differential signals ΔMe(n), and outputs an estimated pulse cycle signal Me(t1) to the memory means 30.

The memory means 30 mainly comprises a PROM (Programmable Read only Memory), and stores ignition angle data, i.e. time data, for the estimated pulse cycle signal Me(t1).

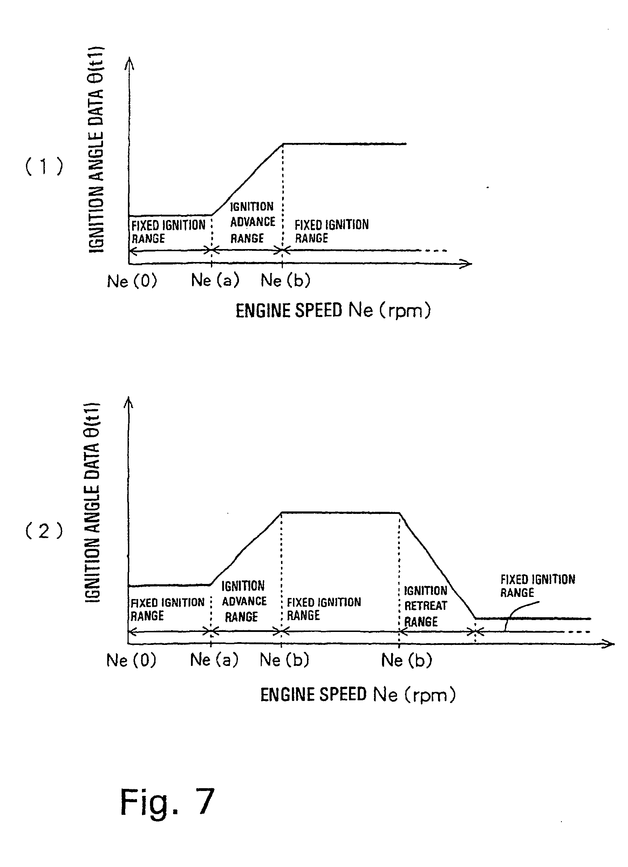

Figs. 7-(1) and 7-(2) are graphs showing ignition angle data θ(t1) characteristics with respect to an engine speed Ne (rpm), {where Ne = 60/Me(T1)}.

The memory means 30 provides the ignition timing computing means 24 with ignition angle data θ(t1) corresponding to the estimated pulse cycle signal Me(t1) as an address.

Figs. 7-(1) and 7-(2) are graphs showing ignition angle data θ(t1) characteristics with respect to an engine speed Ne (rpm), {where Ne = 60/Me(T1)}.

Referring to Fig. 7-(1), the ignition angle data θ(t1) remains unchanged for the engine speeds between {Ne(0)1Ne <Ne(a)}, i.e. is in a fixed ignition range. For the engine speeds Ne between {Ne(a)1(Ne<Ne(b)}, the ignition angle data θ(t1) is in an ignition advancing range. The ignition angle data θ(t1) is another fixed ignition range for the engine speeds Ne between {Ne(b)1Ne}.

The memory means 30 stores these ignition angle data θ(t1).

The ignition timing computing means 24 performs computation or processing for deriving ignition timing in the front halves (ta∼tb, td∼te) of the cycle Me(t) shown in Fig. 3-(4).

Specifically, the ignition timing computing means 24 computes the ignition timing on the basis of the ignition angle data θ(t1) and time ta where the pulse signal Sp1(t1) is produced, and outputs an ignition timing signal S24(a) to the igniting means 25 at time tf.

When the ignition control signals S23 denote allowance of ignition, the igniting means 25 outputs an ignition signal S25 to the ignition coil 15 at the time tf where the ignition timing signal S24(a) is input.

Conversely, when the ignition control signals S23 denote the ignition suspension, the igniting means 25 does not output any ignition timing signal S24(a) to the ignition coil 15.

The foregoing operations are repeatedly carried out.

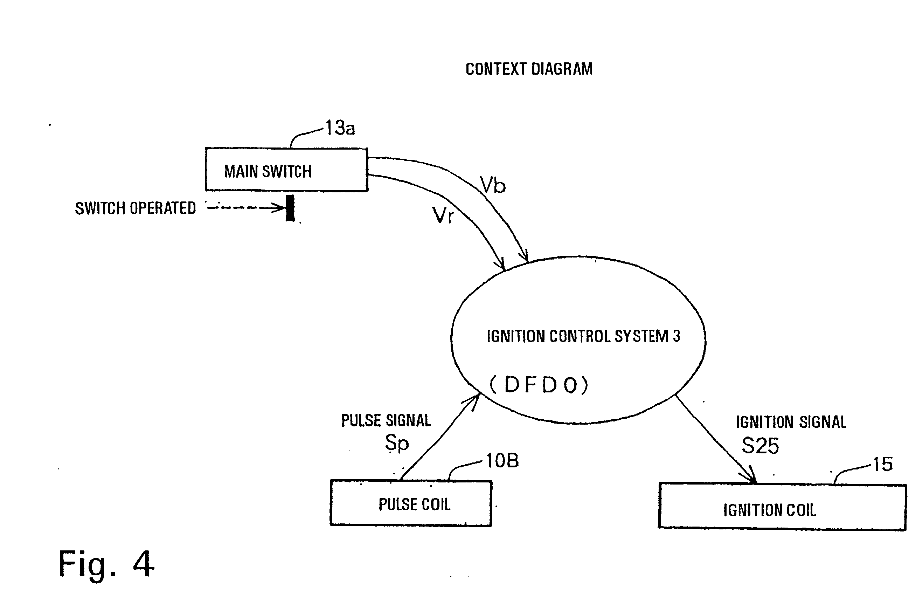

Fig. 4 is a context diagram of an ignition control system 3 according to the present invention.

The ignition control system 3 outputs the ignition signal S25 to the ignition coil 15 on the basis of the rectified output Vb and reference voltage Vr from the main switch 13 and the operation of the main switch, and in response to the pulse signal Sp from the pulse coil 10B.

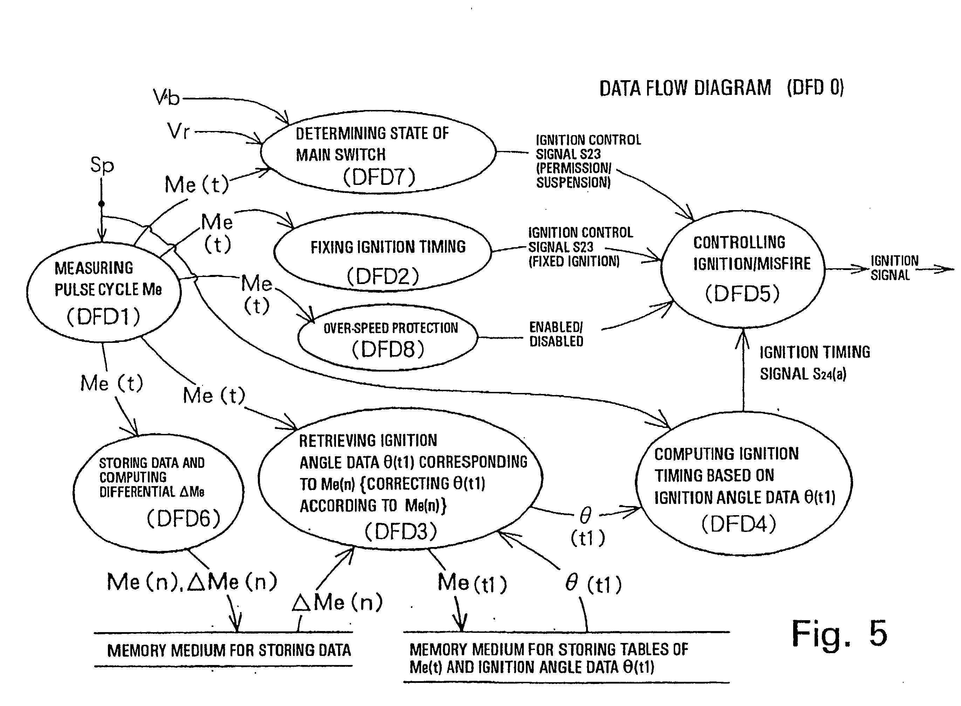

Fig. 5 is a data flow diagram (DFD) of the ignition control system 3.

Referring to Fig. 5, DFD1 measures the pulse cycle Me on the basis of the pulse signal Sp, and outputs a pulse cycle signal Me(t) to DFD2, DFD3, DFD6, DFD7, and DFD8.

DFD2 fixes the ignition timing on the basis of the pulse cycle signal Me(t), and outputs the ignition control signals S23 (denoting fixed ignition) to DFD5.

DFD6 computes N differentials ΔMe(n) on the basis of the pulse cycle signal Me(t), and stores N pulse cycle signals Me(n) and N differentials ΔMe(n) in memory media.

DFD3 reads the ignition angle data θ(t1) corresponding to the N pulse cycle signals Me(t) from the memory media, corrects the ignition angle data θ(t1) using N differentials ΔMe(n), and outputs the corrected ignition angle data θ(t1) to DFD4.

DFD4 computes the ignition timing on the basis of the pulse signal Sp and the ignition angle data θ(t1), and outputs the ignition timing signal S24(a) to DFD5.

DFD5 controls ignition/misfire in response to the ignition control signal S23 and the ignition timing signal S24(a), and outputs the ignition signal to the ignition coil.

DFD8 outputs an over-speed protection signal to DFD5 in response to the pulse cycle signal Me(t).

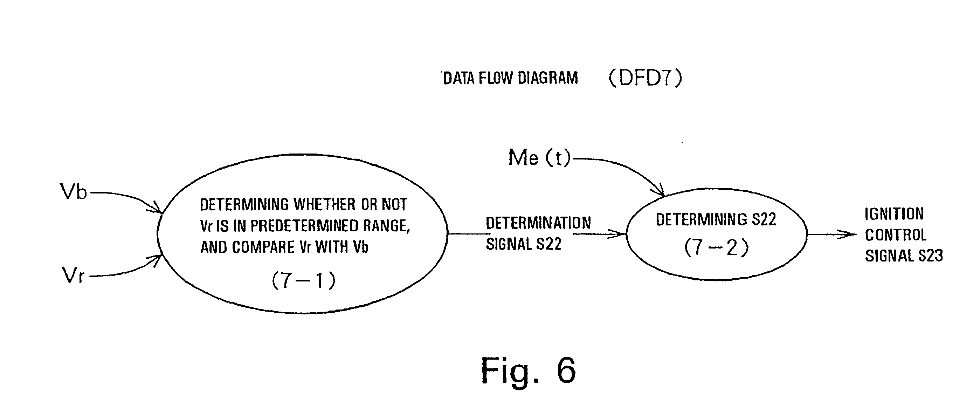

Fig. 6 shows details of the data flow diagram DFD7.

In Fig. 6, DFD7 checks whether or not the reference voltage Vr is within the predetermined range in (7-1), compares the reference voltage Vr with the rectified output Vb, determines whether or not the rectified output Vb is larger than the reference Vr, and outputs the determination signal S22 to (7-2).

(7-2) in DFD7 outputs the ignition control signal S23 in response to the pulse cycle signal Me(t) and the determination signal S22.

As described, the ignition control system 3 comprises the reference voltage generating means 21, voltage determining means 17, ignition control means 23, ignition timing computing means 24, igniting means 25, and pulse cycle measuring means 29 and memory means 30, thereby improving the reliability of the voltage determining means 17, and enabling vehicle engines having different characteristics to be optimally ignited in accordance with engine speeds. Therefore, it is not necessary to match the generation timing of the pulse signal Sp in the pulse coil 10B with the phase of the generated output Va of the AC generator 10, which enables components to be applied to common usage.

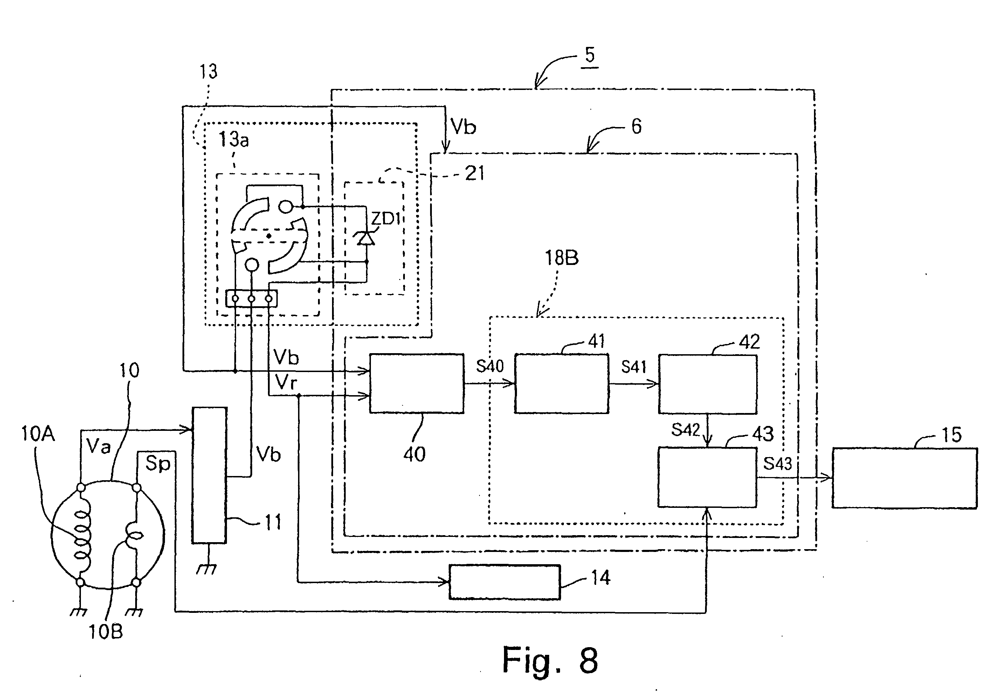

Fig. 8 is a block diagram of a main part of an ignition control system 5 according to the present invention.

Referring to Fig. 8, the ignition control system 5 comprises a reference voltage generating means 21 and an ignition controller 6.

The ignition controller 6 comprises a voltage determining means 17 and an analog control means 18B.

The analog control means 18B comprises a switch means 41, an igniting power source 42, and an igniting means 43.

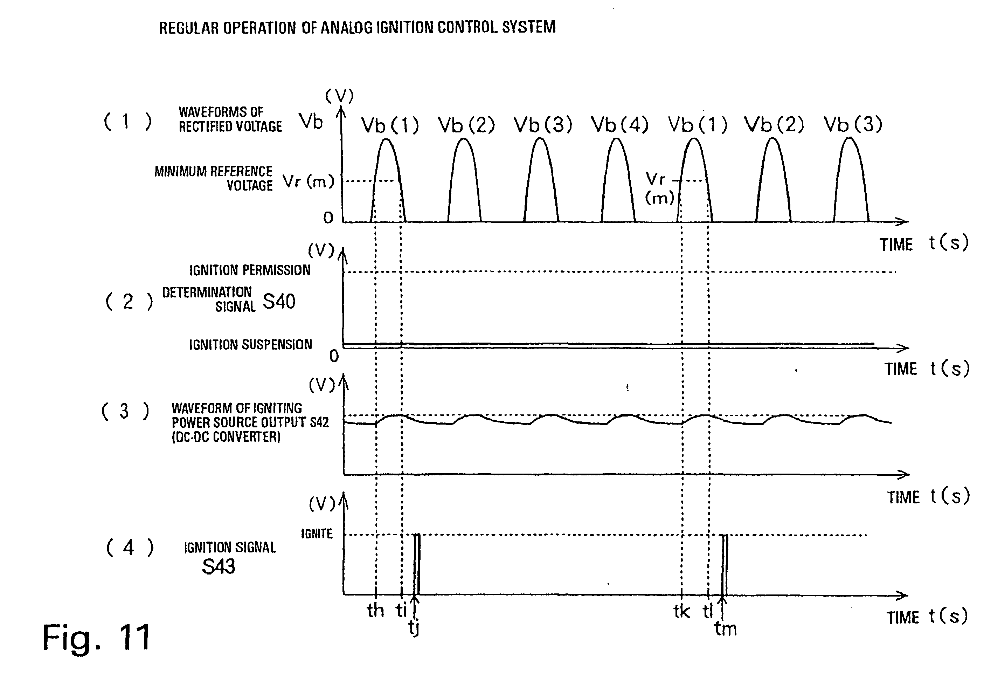

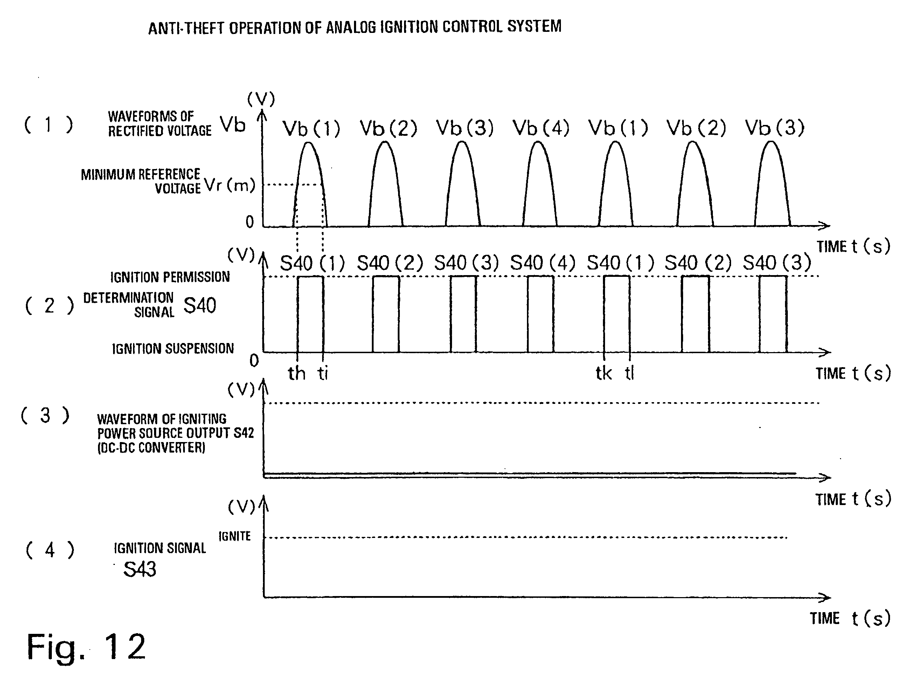

The operation of the ignition control system 5 shown in Fig. 8 will be described with reference to Figs. 11 and 12.

Fig. 11 shows the regular operation of the ignition control system.

Fig. 12 shows the anti-theft operation of the ignition control system.

The reference voltage generating means 21 generates the reference voltage Vr from the rectified output Vb, supplied from the regulator 11 via the main switch 13, using the Zener diode ZD1, and outputs the reference voltage Vr to the voltage determining means 17.

Figs. 11-(1) and 12-(1) show waveforms of the rectified output Vb which is obtained by rectifying the generated output Va of the 8-pole AC generator 10, in the regulator 11.

The waveform of the rectified output Vb has four half-waveforms Vb(1), Vb(2), Vb(3) and Vb(4) per rotation of the vehicle engine, as shown in Figs. 11-(1) and 12-(1).

In the drawings, a minimum reference voltage Vr(m) is a Zener voltage of the Zener diode ZD1.

The reference voltage Vr becomes zero when the rectified output Vb of the regulator 11 is equal to or less than the Zener voltage of the Zener diode ZD1.

Each time the regulator 11 outputs the rectified output Vb, the voltage determining means 17 determines whether or the reference voltage Vr is within the predetermined range. If not, the voltage determining means 17 outputs to the switch means 41 the determination signal S40 {S40(1) ∼ S40(4)} indicative of the ignition suspension shown in Fig. 12-(2).

Further, each time the regulator 11 outputs the rectified output Vb, the voltage determining means 17 determines whether or not the reference voltage Vr is within the predetermined range. If the reference voltage Vr is within the predetermined range, the voltage determining means 17 compares the reference voltage Vr with the rectified output Vb from the regulator 11, and determines whether or not the rectified output Vb is equal to or larger than the reference voltage Vr. If not, the voltage determining means 17 also outputs to the switch means 41 the determination signal S40 {S40(1) ∼ S40(4)} indicative of the ignition suspension, shown in Fig. 12-(2).

Only when the reference voltage Vr is within the predetermined range and when the rectified output Vb is equal to larger than the reference voltage Vr, the voltage determining means 17 provides the switch means 41 with the determination signal S40 indicative of allowance of ignition shown in Fig. 11-(2).

The switch means 41 controls the igniting power source 42 of the igniting means 43 in response to the determination signal S40.

When the determination signal S40 denotes allowance of ignition, the switch means 41 controls the igniting power source 42 in order to supply an output S42 (shown in Fig. 11-(3)) to the igniting means 43.

The igniting means 43 outputs an ignition signal S43 (shown in Fig. 11-(4)) to the ignition coil 15 in response to the pulse signal Sp from the pulse coil 10B.

When the determination signal S40 denotes the ignition suspension, the switch means 41 nullifies the output S24 of the igniting power source 42 (shown in Fig. 12-(3)), and prevents the igniting means 43 from igniting.

As described, the ignition control system 5 comprises the reference voltage generating means 21, voltage determining means 17, switch means 41, igniting power source 42, and igniting means 43, thereby improving the reliability of the voltage determining means 17. Therefore, it is not necessary to match the generation timing of the pulse signal Sp in the pulse coil 10B with the phase of the generated output Va of the AC generator 10, which allows components to be used in common.

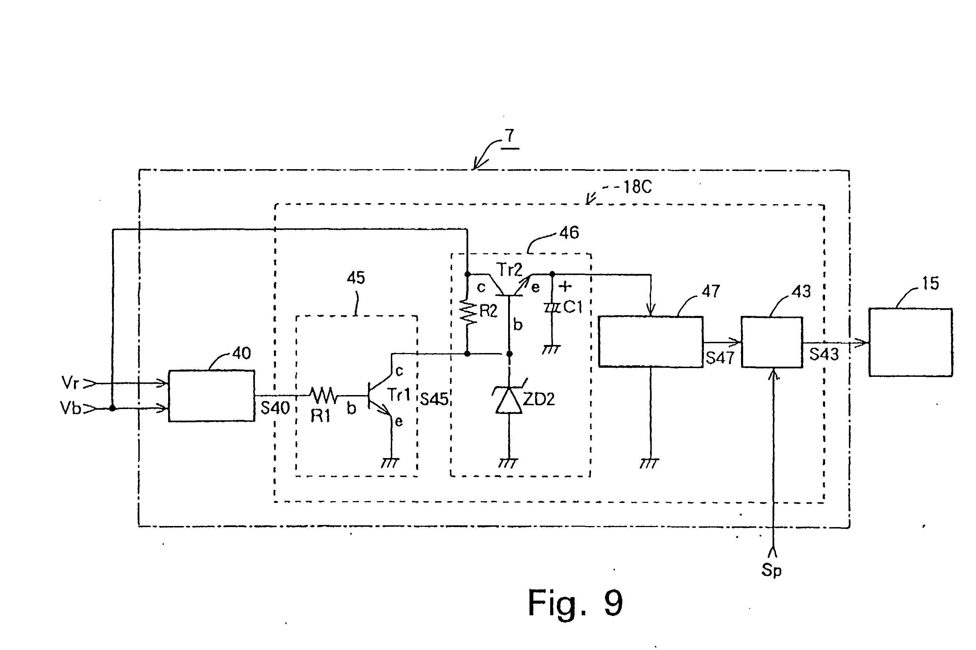

Fig. 9 is a block diagram of a main part of an ignition control system 7 according to the present invention.

Referring to Fig. 9, the ignition control system 7 comprises a voltage determining means 17 and an analog control means 18C.

The analog control means 18C comprises a control switch means 45, an igniting power source switch means 46, a DC-DC converter 47, and an igniting means 43.

The control switch means 45 comprises a protecting resistor R1 and a switching transistor Tr1. When a determination signal S40 of the voltage determining means 17 denotes allowance of ignition (shown in Fig. 11-(2)), the control switch means 45 is turned off since the switching transistor Tr1 becomes non-conductive.

Conversely, when the determination signal S40 denotes allowance of ignition (shown in Fig. 12-(2)), the control switch means 45 is turned on since the switching transistor Tr1 becomes conductive.

The igniting power source switch means 46 comprises a biasing resistor R2, a Zener diode ZD2, a switching transistor Tr2, and a capacitor C1.

When the determination signal S40 denotes allowance of ignition, the control switch means 45 is turned off, a base terminal of the switch transistor Tr2 is biased by the biasing resistor R2 and the Zener diode ZD2, the switch transistor Tr2 becomes conductive, the igniting power source switch means 46 is turned on, and the rectified output Vb is applied to the DC-DC converter 47.

The DC-DC converter 47 supplies an igniting voltage S47, so that the igniting means 43 output an ignition signal S43 to the ignition coil.

When the determination signal S40 denotes the ignition suspension, the control switch means 45 is turned on, the base terminal of the switch transistor Tr2 has a zero potential, the switching transistor Tr2 becomes non-conductive, and the igniting power source switch means 46 is turned off, so that no rectified output Vb is applied to the DC-DC converter 47.

The igniting means 43 suspends ignition since the igniting voltage S47 becomes the zero potential in the DC-DC converter 47.

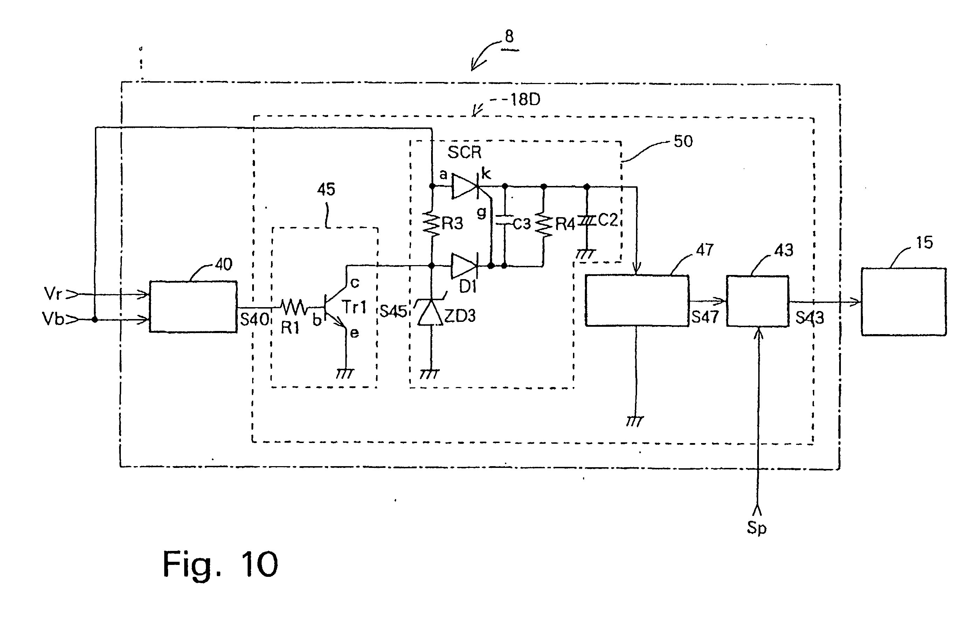

Fig. 10 is a block diagram of a main part of an ignition control system 8 according to the present invention.

Referring to Fig. 10, the ignition control system 8 comprises a voltage determining means 17 and an analog control means 18D.

The analog control means 18D comprises a control switch means 45, an igniting power source switch means 50, a DC-DC converter 47, and an igniting means 43.

The igniting power source switch means 50 comprises a biasing resistor R3, a biasing resistor R4, a Zener diode ZD3, an SCR (Silicon Controlled Rectifier), a diode D1, a capacitor C2, and a capacitor C3.

In the ignition control-system 8, the igniting power source switch means 50 has the SCR as a switching element in place of the transistor which is used for the igniting power source switch means 46 of the ignition control system 7.

When a determination signal S40 denotes allowance of ignition, the control switch means 45 is turned off, a gate terminal of the SCR is biased by the biasing resistors (R3, R4), diode D1 and Zener diode ZD2, the SCR becomes conductive, the igniting power source switch means 50 is turned on, and the rectified output Vb is applied to the DC-DC converter 47.

When the determination signal S40 denotes the ignition suspension, the control switch means 45 is turned on, the SCR has a zero potential at its gate terminal and becomes non-conductive, and the igniting power source switch means 46 is turned on, so that the rectified output Vb is applied to the DC-DC converter 47.

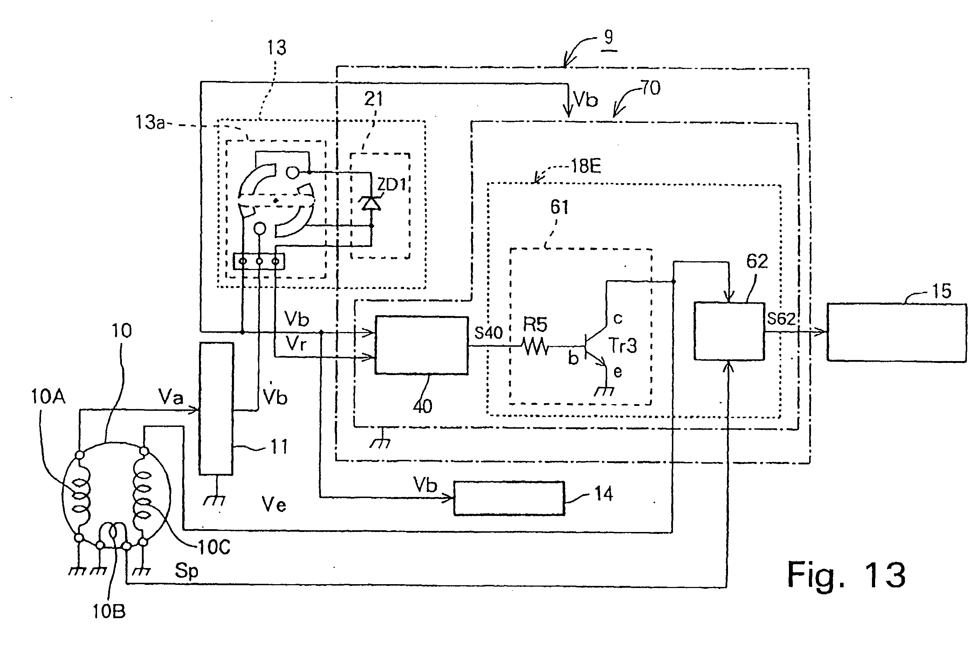

Fig. 13 is a block diagram of an ignition control system 9 according to the present invention.

The ignition control system 9 comprises a reference voltage generating means 21 and an ignition controller 10.

The ignition controller 10 comprises a voltage determining means 17 and an analog control means 18E.

The analog control means 18E comprises an igniting power source switch means 61 and an igniting means 62.

The igniting power source switch means 61 comprises a protecting resistor R5 and a switching transistor Tr3.

When the determination signal S40 of the voltage determining means 17 denotes allowance of ignition as shown in Fig. 11-(2), the switch transistor Tr3 becomes non-conductive in the igniting power source switch means 61, the igniting power source switch means 61 is turned off, and an AC voltage Ve of an exciter coil 10C is applied to the igniting means 62 as an igniting power source voltage.

Conversely, when the determination signal S40 of the voltage determining means 17 denotes the ignition suspension (shown in fig. 12-(2)), the switching transistor Tr3 of the igniting power source switch means 61 becomes conductive, the igniting power source switch means 61 is turned on, the exciter coil 10C is shorted, and the igniting power source voltage of the igniting means 62 becomes the zero potential. Therefore, the igniting means 62 suspends ignition.

Although the present invention has been described and illustrated in detail with respect to one embodiment, it is to be clearly understood that the same is by way of illustration and example only, and is not to be taken by way of limitation. The scope is defined only by the claims.

### Description of Reference Numerals

1, 3, 5, 9 ... ignition control systems, 2, 4, 6, 7, 8, 70 ... ignition controllers, 10 ... AC generator, 10A ... charging coil, 10B ... pulse coil, 11 ... regulator, 12, 13 ... main switches, 14 ... DC load, 15 ... ignition coil, 16 ... reference voltage generating means, 17 ... voltage determining means, 18 ... control means, 18A ... digital control means, 18B, 18D, 18E ... analog control means, 20 ...digital control means (CPU), 21 ... reference voltage generating means, 23 ... ignition control means, 24 ... ignition timing computing means, 25, 43, 62 ... igniting means, 26 ... pulse cycle measuring means, 27 ... differential computing means, 28, 30 ... memory means, 29 ... pulse cycle estimating means, 41 ... switch means, 42 ... igniting power source, 45 ... control switch means, 46 ... igniting power source switch means, 47 ... DC-DC converter, 50, 61 ... igniting power source switch means, DFD0, DFD1, DFD2, DFD3, DFD4, DFD5, DFD6, DFD7, DFD8 ... data flow diagrams, Me(t) ... pulse cycle signal, Me(t0) ... current pulse cycle signal, Me(t1) ... estimated pulse cycle signal, Me(-t), Me(-t1) ... previous pulse cycle signals, Ne, Ne(0), Ne(a), Ne(b) ... engine speeds, PROM, RAM ... memory means, S17 ... determination signal, S18 ... ignition signal, S22, S22(1), S22(2), S22(3), S22(4), S40, S40(1), S40(2), S40(3), S40(4) ... determination signals, S24(b) ... ignition control start signal, S23 ... ignition control signal, S24(a) ... ignition timing signal, S24(b) ... ignition control start signal, S25, S43, S62 ... ignition signals, S42 ... igniting power source output, S47 ... DC-DC converter output, DFD0, DFD1, DFD2, DFD3, DFD4, DFD5, DFD6, DFD7, DFD8 ... data flow diagrams, Me(t) ... pulse cycle-signal, Me(t0) ... current pulse cycle signal, Me(t1) ... estimated pulse cycle signal, Me(-t), Me(-t1) ... previous pulse cycle signals, Ne, Ne(0), Ne(a), Ne(b) ... engine speeds, PROM, RAM ... memory means, Sp, Sp1(t), Sp2(t) ... pulse signals, ta, td, te, tf ... times, Va ... generated output, Vb, Vb(1), Vb(2), Vb(3), Vb(4) ... rectified outputs, Vr ... reference voltage, Vr(m) ... minimum reference voltage, ZD1 ... Zener diode, ΔMe(n), ΔMe(t), ΔMe(t0) ... differential signals, θ(1) ... ignition angle data.

### List of reference signs used in certain figures

- FIG. 1: 1: IGNITION CONTROL SYSTEM
2: IGNITION CONTROLLER
10: AC GENERATOR
10A: CHARGING COIL
10B: PULSE COIL
11: REGULATOR
12: MAIN SWITCH UNIT
12a: MAIN SWITCH
14: DC LOAD
15: IGNITION COIL
16: REFERENCE VOLTAGE GENERATING MEANS
17: VOLTAGE DETERMINING MEANS
18: CONTROL MEANS
- FIG. 2: 3: IGNITION CONTROL SYSTEM
4: IGNITION CONTROLLER
10B: PULSE COIL
11: REGULATOR
13: MAIN SWITCH UNIT
13a: MAIN SWITCH
14: DC LOAD
15: IGNITION COIL
18A: DIGITAL CONTROL MEANS
21: REFERENCE VOLTAGE GENERATING MEANS
22: VOLTAGE DETERMINING MEANS
23: IGNITION CONTROL MEANS
24: IGNITION TIMING COMPUTING MEANS
25: IGNITING MEANS
26: PULSE CYCLE MEASURING MEANS
27: DIFFERENTIAL COMPUTING MEANS
28: MEMORY MEANS
29: PULSE CYCLE ESTIMATING MEANS
30: MEMORY MEANS
- FIG. 8: 5: IGNITION CONTROL SYSTEM
6: IGNITION CONTROLLER
10: AC GENERATOR
10A: CHARGING COIL
10B: PULSE COIL
11: REGULATOR
13: MAIN SWITCH UNIT
13a: MAIN SWITCH
14: DC LOAD
15: IGNITION COIL
18B: ANALOG CONTROL MEANS
21: REFERENCE VOLTAGE GENERATING MEANS
40: VOLTAGE DETERMINING MEANS
41: SWITCH MEANS
42: IGNITING POWER SOURCE
43: IGNITING MEANS
- FIG. 9: 7 : IGNITION CONTROL SYSTEM
15: IGNITION COIL
18C: ANALOG CONTROL MEANS
40: VOLTAGE DETERMINING MEANS
43: IGNITING MEANS
45: CONTROL SWITCH MEANS
46: IGNITING POWER SOURCE SWITCH MEANS
47: DC-DC CONVERTER
- FIG. 10: 8: IGNITION CONTROL SYSTEM
15: IGNITION COIL
18D: ANALOG CONTROL MEANS
40: VOLTAGE DETERMINING MEANS
43: IGNITING MEANS
45: CONTROL SWITCH MEANS
47: DC-DC CONVERTER
50: IGNITING POWER SOURCE SWITCH MEANS
- FIG. 13: 9: IGNITION CONTROL SYSTEM
10: AC GENERATOR
10A: CHARGING COIL
10B: PULSE COIL
10C: EXCITER COIL
11: REGULATOR
13: MAIN SWITCH UNIT
13a: MAIN SWITCH
14: DC LOAD
15: IGNITION COIL
18E: ANALOG CONTROL MEANS
21: REFERENCE VOLTAGE GENERATING MEANS
40: VOLTAGE DETERMINING MEANS
61: IGNITING POWER SOURCE SWITCH MEANS
62: IGNITING MEANS
70: IGNITION CONTROLLER

## Claims

1. An ignition control system (1; 3; 5; 9) for controlling ignition of a vehicle engine on the basis of a pulse signal (Sp) generated by a pulse coil (10B) in response to the rotation of the vehicle engine, using a rectified output (Vb) of a regulator (11) for rectifying a generated output of an AC generator (10) activated by the vehicle engine,
**characterized in that** the ignition control system comprises:
reference voltage generating means (16; 21) for generating a reference voltage (Vr) each time the rectified output is produced; and
an ignition controller (2; 4; 6; 7; 8; 70) for controlling ignition of the vehicle engine on the basis of the reference voltage (Vr) and the rectified output (Vb), wherein
the ignition controller comprises voltage determining means (17; 22; 40) for determining whether or not the rectified output (Vb) is equal to or larger than the reference voltage (Vr) and comparing the reference voltage (Vr) with the rectified output (Vb), and outputting a comparision result signal (S17; S22; S40) indicative of a determination result; and
control means (18; 18A; 18B; 18C; 18D; 18E) for outputting an ignition signal (S18; S25; S43; S62) to an ignition coil (15) on the basis of the comparison result signal (S17; S22; S40) and the pulse signal (Sp).

2. The ignition control system of claim 1, wherein the control means comprises a digital control means (18A) which includes:
ignition timing computing means (24) for computing ignition timing of the vehicle engine at a front half of the pulse signal cycle on the basis of the pulse signal (Sp) and pulse cycle signal (Me(t)) and outputting an ignition timing signal (S24(a)) indicative of the computed ignition timing to the igniting means; and
ignition control means (23) for receiving, at a latter half of the pulse signal cycle after the computation of the ignition timing by the ignition timing computing means (24), the determination signals (S22) each time the rectified output (Vb) is produced, performing majority determination on the basis of the received determination signals (S22) , and controlling allowance or suspension of the ignition in a succeeding pulse signal cycle in response to the ignition timing signal (S24(b)).

3. The ignition control system of claim 1 or 2, wherein the control means comprises digital control means (18A) including:
pulse cycle measuring means (26) for measuring the cycle of the pulse signal (Sp) and outputting a pulse cycle signal (Me(t));
differential computing means (27) for computing cyclic variations of the pulse signal (Sp) and outputting a differential signal (ΔMe(t)) indicative of the computed result;
pulse'cycle estimating means (29) for estimating a cycle of a succeeding pulse signal on the basis of the pulse cycle signal (me(t)) and the differential signal (ΔMe(t)) and outputting a pulse cycle signal (me(t)) indicative of the estimated result;
ignition control means (23) for producing an ignition control signal (S23) on the basis of the determination signal (S22) and the pulse cycle signal (Me(t)) ;
ignition timing computing means (24) for computing ignition timing of the vehicle engine on the basis of the pulse signal (Sp) and the pulse cycle estimating signal (me(t)), and outputting an ignition timing signal (S24(a)) indicative of computed ignition timing; and
igniting means (25) for outputting an ignition signal (25) to the ignition coil (15) on the basis of the ignition control signal (S23) and the ignition timing signal (S24(a)).

4. The ignition control system of claim 1, wherein the control means comprises analog control means (18B;18C; 18D; 18E) including:
igniting means (43) for outputting an ignition signal (S42) to an ignition coil (15) in response to the pulse signal (Sp);
an igniting power source (42; 47) for powering the igniting means (43); and
switch means (41; 45,46) for enabling/disabling the supply of power to the igniting power source (42; 47)in response to the determination signal (S40).

5. The ignition control circuit of claim 1 or 4, wherein the switch means comprises:
igniting power source switch means (46) for enabling/disabling the supply of power to the igniting power source (47); and
control switch means (45) adapted to be turned off and to turn on the igniting power source switch means (46) only when the determination signal (S40) denotes allowance of ignition and adapted to be turned on and to turn off the igniting power source switch means (46) when the determination signal (S40) denotes a state other than allowance of ignition.

## Patentansprüche

1. Zündsteuer/regelsystem (1; 3; 5; 9) zur Zündsteuerung/regelung eines Fahrzeugmotors basierend auf einem von einer Pulsspule (10B) in Reaktion auf die Drehung des Fahrzeugmotors erzeugten Pulssignal (Sp) unter Verwendung einer gleichgerichteten Ausgabe (Vb) eines Reglers (11) zur Gleichrichtung einer erzeugten Ausgabe eines von dem Fahrzeugmotor angetriebenen Wechselstromgenerators (10),
**dadurch gekennzeichnet, dass** das Zündsteuer/regelsystem umfasst:
ein Referenzspannungserzeugungsmittel (16; 21) zur Erzeugung einer Referenzspannung (Vr) jedes Mal dann, wenn die gleichgerichtete Ausgabe erzeugt wird; und
eine Zündsteuer/regeleinrichtung (2; 4; 6; 7; 8; 70) zur Steuerung/-Regelung der Zündung des Fahrzeugmotors basierend auf der Referenzspannung (Vr) und der gleichgerichteten Ausgabe (Vb), wobei die Zündsteuer/regeleinrichtung ein Spannungsbestimmungsmittel (17; 22; 40) umfasst zur Bestimmung, ob die gleichgerichtete Ausgabe (Vb) gleich oder größer als die Referenzspannung (Vr) ist oder nicht, und zum Vergleich der Referenzspannung (Vr) mit der gleichgerichteten Ausgabe (Vb) und zum Ausgeben eines ein Bestimmungsergebnis anzeigenden Vergleichsergebnissignals (S17; S22; S40); und ein Steuer/Regelmittel (18; 18A, 18B; 18C; 18D; 18E) zur Ausgabe eines Zündsignals (S18; S25; S43; S62) an eine Zündspule (15) basierend auf dem Vergleichsergebnissignal (S17; S22; S40) und dem Pulssignal (Sp).

2. Zündsteuer/regelsystem nach Anspruch 1, wobei das Steuer/Regelmittel ein Digitalsteuer/regelmittel (18A) umfasst, welches umfasst:
ein Zündzeitpunktberechnungsmittel (24) zur Berechnung des Zündzeitpunkts des Fahrzeugmotors in einer vorderen Hälfte des Pulssignalzyklus basierend auf dem Pulssignal (Sp) und dem Pulszyklussignal (Me(t)) und zur Ausgabe eines Zündzeitpunktsignals (S24(a)), welches dem Zündmittel den berechneten Zündzeitpunkt anzeigt; und
ein Zündsteuer/regelmittel (23) zum Empfang der Bestimmungssignale (S22) in einer letzteren Hälfte des Pulssignalzyklus nach der Berechnung des Zündzeitpunkts durch das Zündzeitpunktberechnungsmittel (24) jedes Mal dann, wenn die gleichgerichtete Ausgabe (Vb) erzeugt wird, zur Durchführung einer Majoritätsbestimmung basierend auf den empfangenen Bestimmungssignalen (S22), und zur Steuerung/Regelung einer Erlaubnis oder Aussetzung der Zündung in einem nachfolgenden Pulssignalzyklus in Reaktion auf das Zündzeitpunktsignal (S24(b)).

3. Zündsteuer/regelsystem nach Anspruch 1 oder 2, wobei das Steuer/Regelmittel ein Digitalsteuer/regelmittel (18A) umfasst, umfassend:
ein Pulszyklusmessmittel (26) zur Messung des Zyklus des Pulssignals (Sp) und Ausgabe eines Pulszyklussignals (Me(t));
ein Differenzberechnungsmittel (27) zur Berechnung zyklischer Veränderungen des Pulssignals (Sp) und zum Ausgeben eines das berechnete Ergebnis anzeigenden Differenzsignals (ΔMe(t));
ein Pulszyklusschätzmittel (29) zum Schätzen eines Zyklus eines nachfolgenden Pulssignals basierend auf dem Pulszyklussignal (me(t)) und dem Differenzsignal (ΔMe(t)) und Ausgeben eines das geschätzte Ergebnis anzeigenden Pulszyklussignals (me(t));
ein Zündsteuer/regelmittel (23) zur Erzeugung eines Zündsteuer/regelsignals (S23) basierend auf dem Bestimmungssignal (S22) und dem Pulszyklussignal (Me(t));
ein Zündzeitpunktberechnungsmittel (24) zur Berechnung des Zündzeitpunkts des Fahrzeugmotors basierend auf dem Pulssignal (Sp) und dem Pulszyklusschätzsignal (me(t)) und zum Ausgeben eines den berechneten Zündzeitpunkt anzeigenden Zündzeitpunktsignals (S24(a)); und
ein Zündmittel (25) zur Ausgabe eines Zündsignals (25) an die Zündspule (15) basierend auf dem Zündsteuer/regelsignal (S23) und dem Zündzeitpunktsignal (S24(a)).

4. Zündsteuer/regelsystem nach Anspruch 1, wobei das Steuer/Regelmittel ein Analogsteuer/regelmittel (18B; 18C; 18D; 18E) umfasst, umfassend:
ein Zündmittel (43) zum Ausgeben eines Zündsignals (S42) an eine Zündspule ( 15) in Reaktion auf das Pulssignal (Sp);
eine Zündenergiequelle (42; 47) zum Versorgen des Zündmittels (43) mit Energie; und
ein Schaltmittel (41; 45, 46) zum Ermöglichen/Unterbrechen der Energiezufuhr zu der Zündenergiequelle (42; 47) in Reaktion auf das Bestimmungssignal (S40).

5. Zündsteuer/regelschaltung nach Anspruch 1 oder 4, wobei das Schaftmittel umfasst:
ein Zündenergiequellenschaltmittel (46) zum Ermöglichen/Unterbrechen der Energiezufuhr zu der Zündenergiequelle (47); und
ein Steuer/Regelschaltmittel (45), welches dazu ausgebildet ist, ausgeschaltet zu werden und das Zündenergiequellenschaltmittel (46) nur dann einzuschalten, wenn das Bestimmungssignal (S40) eine Zünderlaubnis anzeigt, und das dazu ausgebildet ist, eingeschaltet zu werden und das Zündenergiequellenschaltmittel (46) auszuschalten, wenn das Bestimmungssignal (S40) einen anderen Zustand als die Zünderlaubnis anzeigt.

## Revendications

1. Système de commande d'allumage (1 ; 3, 5 ; 9) pour commander l'allumage d'un moteur de véhicule en fonction d'un signal d'impulsion (Sp) généré par une bobine d'impulsion (10B) en réponse à la rotation du moteur de véhicule, en utilisant une sortie redressée (Vb) d'un régulateur (11) pour redresser une sortie générée d'un générateur CA (10) activée par le moteur de véhicule,
**caractérisé en ce que** le système de commande d'allumage comprend :
des moyens de génération de tension de référence (16 ; 21) pour générer une tension de référence (Vr) chaque fois que la sortie redressée est produite ; et
un dispositif de commande d'allumage (2 ; 4 ; 6 ; 7 ; 8 ; 70) pour commander l'allumage du moteur de véhicule en fonction de la tension de référence (Vr) et de la sortie redressée (Vb), dans lequel
le dispositif de commande d'allumage comprend des moyens de détermination de tension (17 ; 22 ; 40) pour déterminer si la sortie redressée (Vb) est supérieure ou égale à la tension de référence (Vr) et pour comparer la tension de référence (Vr) à la sortie redressée (Vb), et pour émettre en sortie un signal de résultat de comparaison (S17, S22, S40) indicatif d'un résultat de détermination ; et des moyens de commande (18 ; 18A ; 18B ; 18C ; 18D ; 18E) pour émettre en sortie un signal d'allumage (S18, S25 ; S43 ; S62) vers une bobine d'allumage (15) en fonction du signal de résultat de comparaison (S17 ; S22 ; S40) et du signal d'impulsion (Sp).

2. Système de commande d'allumage selon la revendication 1, dans lequel les moyens de commande comprennent des moyens de commande numériques (18A) qui comprennent :
des moyens de calcul de séquencement d'allumage (24) pour calculer le séquencement d'allumage du moteur de véhicule sur une moitié avant du cycle de signal d'impulsion en fonction du signal d'impulsion (Sp) et du signal de cycle d'impulsion (Me(t)) et pour délivrer aux moyens d'allumage un signal de séquencement d'allumage (S24(a)) indicatif du séquencement d'allumage calculé; et
des moyens de commande d'allumage (23) pour recevoir, sur une moitié arrière du cycle de signal d'impulsion après le calcul du séquencement d'allumage par les moyens de calcul de séquencement d'allumage (24), les signaux de détermination (S22) chaque fois que la sortie redressée (Vb) est produite, pour effectuer une détermination de majorité en fonction du signal de détermination reçu (S22), et pour contrôler l'autorisation ou la suspension de l'allumage dans un cycle de signal d'impulsion en succession en réponse au signal de séquencement d'allumage (S24(b)).

3. Système de commande d'allumage selon la revendication 1 ou 2, dans lequel les moyens de commande comprennent des moyens de commande numériques (18A) comprenant :
des moyens de mesure de cycle d'impulsion (26) pour mesurer le cycle du signal d'impulsion (Sp) et pour émettre en sortie un signal de cycle d'impulsion (Me(t)) ;
des moyens de calcul différentiel (27) pour calculer des variations cycliques du signal d'impulsion (Sp) et pour émettre en sortie un signal différentiel (ΔMe(t)) indicatif du résultat calculé ;
des moyens d'estimation de cycle d'impulsion (29) pour estimer un cycle d'un signal d'impulsion en succession en fonction du signal de cycle d'impulsion (me(t)) et du signal différentiel (Δme(t)) et pour émettre en sortie un signal de cycle d'impulsion (me (t)) indicatif du résultat estimé ;
des moyens de commande d'allumage (23) pour produire un signal de commande d'allumage (S23) en fonction du signal de détermination (S22) et du signal de cycle d'impulsion (Me(t)) ;
des moyens de calcul de séquencement d'allumage (24) pour calculer le séquencement d'allumage du moteur de véhicule en fonction du signal impulsion (Sp) et du signal d'estimation de cycle d'impulsion (me(t)), et pour émettre en sortie un signal de séquencement d'allumage (S24(a)) indicatif du séquencement d'allumage calculé ;
des moyens d'allumage (25) pour émettre en sortie un signal d'allumage (25) vers la bobine d'allumage (15) en fonction du signal de commande d'allumage (S23) et du signal de séquencement d'allumage (S24(a)).

4. Système de commande d'allumage selon la revendication 1, dans lequel les moyens de commande comprennent des moyens de commande analogiques (18B ; 18C ; 18D ; 18E) comprenant :
des moyens d'allumage (43) pour émettre en sortie un signal d'allumage (S42) vers une bobine d'allumage (15) en réponse au signal d'impulsion (Sp) ;
une source d'alimentation d'allumage (42 ; 47) pour alimenter les moyens d'allumage (43) ; et
des moyens de commutation (41 ; 45 ; 46) pour activer/désactiver l'alimentation de la source d'alimentation d'allumage (42 ; 47) en réponse au signal de détermination (S40).

5. Circuit de commande d'allumage selon la revendication 1 ou 4, dans lequel les moyens de commutation comprennent :
des moyens de commutation de source d'alimentation d'allumage (46) pour activer/désactiver l'alimentation de la source d'alimentation d'allumage (47) ; et
des moyens de commutation de commande (45) adaptés pour être désactivés et pour activer les moyens de commutation de source d'alimentation d'allumage (46) uniquement lorsque le signal de détermination (S40) constate l'autorisation d'allumage et adaptés pour être activés et pour désactiver les moyens de commutation de source d'alimentation d'allumage (46) lorsque le signal de détermination (S40) constate un état autre que celui d'autorisation d'allumage.
